# NEUE EUROPÄISCHE PATENTSCHRIFT

(11) **EP 1 384 411 B2**
(45) Veröffentlichungstag und Bekanntmachung des Hinweises auf die Entscheidung über den Einspruch: **28.05.2008**
(45) Hinweis auf die Patenterteilung: 12.01.2005
(21) Anmeldenummer: 03010444.2
(22) Anmeldetag: 09.05.2003
(51) Int. Cl.: A23L 1/01, A23L 1/314, A21B 1/28, A21B 1/26, A21B 1/36, A21B 1/40, A47J 37/00, A21B 1/24

(54) **Verfahren und Garofen zum Garen von Fleisch und Fisch**
Process and oven for cooking meat and fish
Procédé et four pour la cuisson de la viande et du poisson

(30) Priorität: 26.07.2002 DE 10234021
(43) Veröffentlichungstag der Anmeldung: 28.01.2004
(73) Patentinhaber: Electrolux Professional GmbH, 22547 Hamburg (DE)
(72) Erfinder: Baumann, Udo, 22459 Hamburg (DE)
(74) Vertreter: Meissner, Bolte & Partner

(56) Entgegenhaltungen:
- EP-A- 0 357 168
- WO-A-01/39611
- DE-U- 20 112 679
- FR-A- 2 501 969
- FR-A- 2 738 125
- US-A- 4 064 796
- US-A- 4 906 485
- US-A- 4 919 950
- US-A- 4 978 542
- US-A- 5 318 792

## Beschreibung

Die Erfindung betrifft ein Verfahren und einen Garofen zum Garen von Fleisch und Fisch. Wird im folgenden nur von Fleisch gesprochen, ist immer auch Fisch gemeint.

Beim Garen tritt aus Fleisch zum einen Saft aus. Zum anderen lösen sich vom Fleisch Krustenteile. Sowohl der Saft als auch die Krustenteile sind von Gewürzen beeinflusst oder bedeckt. Beide enthalten auch Kohlenhydrate und Fett. Alles zusammen unterstreicht den typischen Geschmack des Fleisches.

In der traditionellen Küche entnimmt der Koch den sich in der Pfanne oder auf dem Boden des Ofens sammelnden Garsud aus flüssigen und festen Bestandteilen und gießt ihn ohne weitere feste oder flüssige Zutaten wieder auf das bei 160°C bis 200°C garende Fleisch. Je nach Geschicklichkeit und Erfahrung des Kochs wird der Braten hierdurch jedes Mal auf neue Weise braun und/oder knusprig und/oder würzig und/oder saftig.

In der modernen Küche, insbesondere bei Verwendung von Kombiöfen in Großküchen, beeinträchtig der an den Wänden und auf dem Gargut kondensierende Dampf die Entwicklung der Gewürze und des Geschmacks. Auch lässt sich die gleiche Bräune wie beim traditionellen Garen nur bei Temperaturen von 160 °C bis zu 250 °C erzielen, was der Kruste einen bitteren Geschmack verleiht.

Beim Garen von großen Fleischstücken, insbesondere großem Geflüge wie Truthahn, verbinden sich lange Garzeiten mit großem Gewichtsverlust. Darüber hinaus ist das Eindringen der Gewürze ungenügend, die Fleischfarbe entsprechend blass.

Aus der US-A-4 978 542 und der EP-A-0 357 168 ist eine Methode für die Zubereitung von Speisen mit reduziertem Fettanteil bekannt, bei der ein mittels Mikrowelle vorgegartes Gargut mit Hilfe eines Transportbandes in eine Sprühstation transportierbar ist, in der auf das vorgegarte Gargut erhitztes Öl gesprüht wird, das für eine. erneute Nutzung aufbereitet wird. In der FR-A-2 501 969 ist ein Verfahren zum Garen von Speisen beschriebein, bei dem auf vorgegartes Gargut flüssiges Garmedium geschüttet wird, das gesammelt und bei eventueller Zugabe von Zutaten wieder zugegeben wird. Die US-A-4 919 950 zeigt ein computergesteuertes vollautomatisches Wok-Garsystem zum Zubereiten von chinesischen Speisen, das ein Förderband mit einer Anzahl von Woks aufweist, die durch eine Anzahl von Kochstationen geführt werden, deren erste Öl oder Gewürze auf die Speisen sprüht. Aus der US-A-5 318 792 ist ein Unterdruck-Dampfgarverfahren bekannt, bei dem in einigen Fällen herabtropfender Saft der Wasserversorgung zugeführt wird.

Der Erfindung liegt die Aufgabe zugrunde, ein Verfahren und einen Garofen zu schaffen, mit denen auf effektive Weise eine hohe Garqualität von Fleisch und Fisch erzielbar ist.

Erfindungsgemäß wird diese Aufgabe durch die Merkmale der Ansprüche 1 und 10 gelöst. Vorteilhafte Ausbildungen ergeben sich aus den Unteransprüchen.

Als erstes betrifft die Erfindung ein Verfahren zum Garen, insbesonderte Braten, von Fleisch und Fisch, bei dem
- das Fleisch in einem Garofen ruhend aufgenommen wird,
- das während des Garprozesses aus dem Fleisch austretende und sich vom Fleisch lösende Tropfgut aufgefangen und in einen Festanteil und einen Flüssiganteil getrennt wird und
- der Flüssiganteil oder der Flüssiganteil und Gewürze oder der Flüssiganteil und Garhilfsmittel oder der Flüssiganteil und Gewürze und Garhilfsmittel programmgesteuert in und gegebenenfalls auf das Fleisch verteilt werden.

Die Gewürze werden insbesondere als Flüssiggewürze verteilt, die Garhilfsmittel bei der Verteilung auf das Fleisch als Öl und bei der Verteilung in das Fleisch als Dampf. Das Verteilen des Flüssiganteils und/oder der Gewürze und/oder der Garhilfsmittel erfolgt vorzugsweise durch Sprühen und/oder Injektion. Vorzugsweise werden die Gewürze und/oder die Garhilfsmittel dem Flüssiganteil vor dem Verteilen auf oder in das Fleisch zugefügt.

Das Verteilprogramm wird insbesondere am Garofen durch den Bediener eingegeben, zugeschaltet oder ausgewählt. Es kann aber auch durch ein.Garprogramm zugeschaltet oder ausgewählt oder in ein Garprogramm integriert werden.

Als zweites betrifft die Erfindung einen Garofen, insbesondere zur Durchführung des vorbeschriebenen Verfahrens, mit
- ersten Mitteln zur ruhenden Aufnahme von Fleisch und Fisch
- zweiten Mitteln zum Auffangen des während des Garprozesses aus dem Fleisch austretenden und/oder sich vom Fleisch lösenden Tropfgutes,
- dritten Mitteln zum Trennen des Tropfgutes in einen Flüssiganteil und einen Festanteil,
- vierten Mitteln zum Verteilen des Flüssiganteils oder des Flüssiganteils und von Gewürzen oder des Flüssiganteils und von Garhilfsmitteln oder des Flüssiganteils und von Gewürzen und von Garhilfsmitteln in und gegebenenfalls auf das Fleisch und
- fünften Mitteln zum Steuern des Auffangens und/oder Trennens und/oder Verteilens.

Die ersten Mittel weisen vorzugsweise wenigstens einen Rost und/oder eine Wanne mit wenigstens einem Ablauf für das Tropfgut auf, der insbesondere ständig offen oder gesteuert öffenbar ist.

Die zweiten Mittel besitzen insbesondere einen Sammler, der das vom Fleisch abgegebene Tropfgut unter dem Einfluss der Schwerkraft an die dritten Mittel leitet. Vorzugsweise nimmt er das Tropfgut unmittelbar an den ersten Mitteln und/oder am Boden des Garofens auf. Auch kann der Boden als Sammler ausgebildet sein.

Die dritten Mittel weisen insbesondere ein durch die zweiten Mittel beschicktes Sieb und einen unter dem Sieb angeordneten Behälter für den Flüssiganteil auf. Dem Behälter sind wahlweise der Flüssiganteil und/oder Gewürze und/oder Garhilfsmittel, insbesondere Öl und/oder Dampf zuführbar.

Die vierten Mittel besitzen vorzugsweise wenigstens ein über den ersten Mitteln angeordnetes Sprühsystem und/oder einen in das Fleisch einführbaren Fleischspieß, die über eine Pumpe und ein Leitungssystem mit den dritten Mitteln verbunden sind. Das Sprühsystem und/oder der Fleischspieß sind mit dem Leitungssystem insbesondere lösbar verbindbar, vorzugsweise an das Leitungssystem steckbar.

Insbesondere wölbt sich das Sprühsystem über den ersten Mitteln. Vorzugsweise besitzt es einen mit dem Leitungssystem verbindbaren horizontalen ersten Hohlstab, der von mehreren voneinander beabstandeten zweiten Hohlstäben geschnitten wird, die in Richtung erste Mittel gerichtete.Düsen aufweisen. Es ist insbesondere mit dem Flüssiganteil und/oder Gewürzen und/oder Öl beaufschlagbar.

Der Fleischspieß ist vorzugsweise mit Dampf und/oder Gewürzen beaufschlagbar. Er weist insbesondere einen Temperaturund/oder Feuchtesensor auf.

Das Leitungssystem ist vorzugsweise nahe und/oder hinter der Rückwand oder einer der Seitenwände des Garofens angeordnet.

Die fünften Mittel weisen insbesondere Eingabemittel, Steuermittel, Speichermittel und Anzeigemittel auf.

Als drittes betrifft die Erfindung Fleisch und Fisch, die in einem vorbeschriebenen Garofen nach dem vorbeschriebenen Verfahren gegart sind.

. Die Erfindung wird nachstehend anhand eines Ausführungsbeispieles näher erläutert. In den zugehörigen schematischen Zeichnungen zeigen:
Fig. 1 einen Garofen mit einem Gewürzspray-System in Vorderansicht,
Fig. 2 den Garofen im Längsschnitt,
Fig. 3 den Garofen im Querschnitt
Fig. 4 einen Fleischspieß.

Der Garofen 2 weist ein Gehäuse 4 aus zwei einander gegenüberliegenden Wandungen 6, einer Decke 8, einem Boden 10 und einer Rückwand 12 auf, das durch eine Tür 14 verschließbar ist.
An den Wandungen oder senkrechten Streben S eines im Gehäuse 4 anordenbaren ofenhohen Gestells G befinden sich, paarweise einander gegenüberliegend und über die ganze Höhe verteilt, Einschubschienen 16, in die von der verschließbaren Seite her Gargutträger 18 für Fleisch F, beispielsweise Bräter, Bleche oder Roste, einschiebbar sind. Nichtdargestellte Heizeinrichtungen dienen der Erzeugung der Gartemperaturen

Der Boden 10 steht auf Füßen 20. Unter ihm befindet sich ein Öl- und Gewürzbehälter 22 mit einem seitlich ansetzenden und zunächst nach hinten und dann nach unten führenden Entleerungsrohr 24, das durch ein Entleerungsventil 26 verschließbar ist. An der gegenüberliegenden Seite des Öl- und Gewürzbehälters 22 setzt eine Leitung 28 an, die zunächst ebenfalls nach hinten und dann hinter der Rückwand 12 nach einem kurzen wandparallelen horizontalen Abschnitt senkrecht nach oben geführt ist. In den nach hinten führenden Abschnitt der Leitung 28 ist eine Pumpe 30 geschaltet. Über dem Öl- und Gewürzbehälter 22 befindet sich ein Sieb bzw. ein Filter 31, in dem sich das auf den Boden 10 gelangende Tropfgut sammelt und in einen Flüssiganteil, der in den Öl-und Gewürzbehälter 22 gelangt, und einen Festanteil, der in einen nichtdargestellten Abfallbehälter ausgeworfen oder mit dem Auffangsieb manuell entnommen wird.

Vom senkrechten Abschnitt der Leitung 28 gehen etwa in der Mitte und im oberen Bereich Steckanschlüsse 32 ab, die zusammen mit Steckanschlüssen 34 von Sprühsystemen 36 Steckverbindungen 38 bilden, die nach dem Zusammenstecken sofortige Betriebsbereitschaft der Sprühsysteme 36 herstellen (plug and fit). Die Steckanschlüsse 32 der Leitung 28 führen von hinten nach vorn durch die Rückwand 12 hindurch.

Die antennenartigen Sprühsysteme 36 bestehen jeweils aus vier (oder mehr) voneinander beabstandeten und leicht nach unten gewölbten Hohlstäben 40, die durch einen senkrecht und mittig zu ihnen angeordneten Hohlstab 42 derart miteinander verbunden sind, dass die Hohlräume aller Stäbe 40, 42 miteinander kommunizieren. Jeder der Hohlstäbe 40 weist Düsen 44 auf, die sich gleichmäßig auf seine Länge verteilen und sich nach unten senkrecht von den Hohlstäben 40 wegerstrecken.

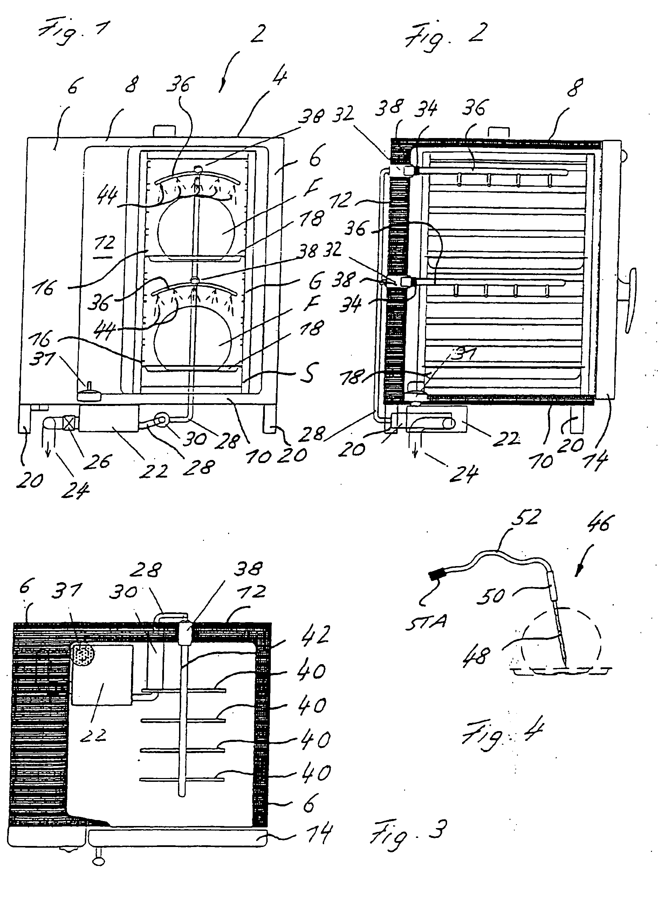

Mit einem Fleischspieß 46 gemäß Fig. 4 lassen sich nicht nur Temperatur ünd/oder Feuchte des Fleisches kontrollieren, sondern auch dessen Garverlauf und/oder Garergebnis, insbesondere Geschmack beeinflussen. Er besteht aus einer in das Fleisch einführbaren hohlen Spitze 48, einem Griff 50, einer Leitung 52 für Medien und elektrische Signale und einem Steckanschluß STA, der medienseitig dem Steckanschluß 34 des Sprühsystems 36 entspricht und zusätzlich in der Lage ist, elektrische Signale über einen nichtdargestellten elektrischen Steckanschluß des Garofens (oder drahtlos) auszutauschen. Dieser ist hierzu dem Steckanschluß 32 zugeordnet. Zum Garen wird insbesondere Dampf in das Fleisch übertragen, wodurch ein höherer Feuchtigkeitsgehalt erzielt und die Garzeit minimiert wird. Zum Würzen wird über den Fleischspieß flüssiges Würzmittel in das Gargut injiziert.

Die Steuerung spricht im übrigen auf Eingaben des Kochs an, der an nichtdargestellten Eingabemitteln Garparameter und/oder gespeicherte Garprogramme und/oder Parameter und/oder gespeicherte Programme zum Steuern des Auffangens und/oder Trennens und/oder Verteilens des aus dem Fleisch F austretenden und sich von der Kruste des Fleisches lösenden Tropfgutes bzw. zur wahlweisen Beaufschlagung des Sprühsystems mit dem Flüssiganteil des Tropfgutes und/oder Gewürzen und/oder Öl und/oder zur wahlweisen Beaufschlagung des Fleischspießes mit Dampf und/oder Gewürzen eingeben kann. Je nach Eingabe greift die Steuerung, sofern sie nicht direkt reagiert, auf in einem nichtdargestellten Speicher abgelegte Garprogramme, die entweder Befehle zur Verteilung und/oder Wahl der Beaufschlagung enthalten oder auf abgelegte Programme zur Verteilung und/oder Wahl der Beaufschlagung zugreifen, oder direkt auf Programme zur Verteilung und/oder Wahl der Beaufschlagung zu.

### Die Wirkungsweise ist folgende:

Nach manueller oder automatischer Befüllung des Öl- und Gewürzbehälters mit Öl und Gewürzen und anschließendem Start des Garprogramms beginnt nach vorbestimmter Zeit für eine vorbestimmte Zeitdauer das Besprühen des Fleischstückes oder ganzen Geflügels F mit der vorbereiteten Öl-Gewürz-Mischung, indem die Pumpe 30 diese Mischung aus dem Öl- und Gewürzbehälter 22 durch die Leitung 28 in die Sprühsysteme 36 und schließlich durch die Düsen 44 drückt. Ist der Garvorgang entsprechend fortgeschritten, tritt aus dem Fleisch F Saft aus, der sich sowohl mit der Öl-Gewürzmischung als auch mit sich lösenden Krustenteilen mischt. Die geschmacks- und krustenbildende Mischung bleibt zum einen Teil am Fleisch F. Zum anderen Teil tropft sie nach unten auf den als Sammler wirkenden Boden 10, von wo aus sie in das Sieb 31 und als Flüssiganteil schließlich in den Öl- und Gewürzbehälter 22 gelangt.
Im zeitlich vorbestimmten nächsten Sprühzyklus, fördert die Pumpe 30 nun auf das Fleisch F nicht nur eine originale Öl-Gewürz-Mischung, sondern eine Mischung aus originalen Ölen und Gewürzen, aus gegebenenfalls fleischbeeinflussten Ölen und Gewürzen und aus fleischeigenen Fetten, Eiweißen und Kohlehydraten, die zumindest anteilig temperaturverändert und/oder Öl-und gewürzverändert sein können.

Im Rahmen dieser Zyklen erfährt das Fleisch in relativ kurzer Zeit und bei relativ geringen Temperaturen eine Behandlung, die es auf wiederholbare Weise braun, knusprig, würzig und saftig macht.

Ergänzend hierzu wird der Fleischspieß 46 mit dem Steckanschluß STA an die Leitung 28 und mit der Spitze 48 in das Fleisch F gesteckt und so auch in dessen Inneres programmgesteuert Gewürze oder Dampf geleitet. Temperaturund/oder Feuchtesensoren des Fleischspießes 46 können dabei Daten zur Verfügung stellen, anhand derer die Steuerung in der Lage ist, über den Gargrad und die Garqualität des Fleisches F zu entscheiden.

## Patentansprüche

1. Verfahren zum Garen, insbesondere Braten, von Fleisch und Fisch, bei dem
a) das Fleisch in einem Garofen ruhend aufgenommen wird,
b) das während des Garprozesses aus dem Fleisch austretende und sich vom Fleisch lösende Tropfgut aufgefangen und in einen Festanteil und einen Flüssiganteil getrennt wird und
d) der Flüssiganteil oder der Flüssiganteil und Gewürze oder der Flüssiganteil und Garhilfsmittel oder der Flüssiganteil und Gewürze und Garhilfsmittel programmgesteuert in das Fleisch verteilt wird bzw. werden.

2. Verfahren nach Anspruch 1, bei dem
der Flüssiganteil oder der Flüssiganteil und Gewürze oder der Flüssiganteil und Garhilfsmittel oder der Flüssiganteil und Gewürze und Garhilfsmittel programmgesteuert in und auf das Fleisch verteilt wird bzw. werden.

3. Verfahren nach Anspruch 1 oder 2, bei dem als Gewürze Flüssiggewürze verteilt werden.

4. Verfahren nach einem der Ansprüche 1 bis 3, bei dem als Garhilfsmittel für das Verteilen auf das Fleisch Öl und für das Verteilen in das Fleisch Dampf oder Flüssiggewürz verteilt wird.

5. Verfahren nach einem der Ansprüche 1 bis 4, bei dem der Flüssiganteil und/oder die Gewürze und/oder die Garhilfsmittel auf das Fleisch gesprüht und/oder in das Fleisch injiziert werden.

6. Verfahren nach einem der Ansprüche 1 bis 5, bei dem die Gewürze und/oder die Garhilfsmittel dem Flüssiganteil vor dem Verteilen auf oder in das Fleisch zugefügt werden.

7. Verfahren nach einem der Ansprüche 1 bis 6, bei dem das Verteilprogramm am Garofen durch den Bediener eingegeben, zugeschaltet oder ausgewählt wird.

8. Verfahren nach einem der Ansprüche 1 bis 7, bei dem das Verteilprogramm durch ein Garprogramm zugeschaltet oder ausgewählt wird.

9. Verfahren nach einem der Ansprüche 1 bis 8, bei dem das Verteilprogramm in ein Garprogramm integriert wird.

10. Garofen, insbesondere zur Durchführung des Verfahrens nach einem der Ansprüche 1 bis 9, mit
a) ersten Mitteln zur ruhenden Aufnahme von Fleisch und Fisch (F),
b) zweiten Mitteln zum Auffangen des während des Garprozesses aus dem Fleisch (F) austretenden und sich vom Fleisch (F) lösenden Tropfguts,
c) dritten Mitteln zum Trennen des Tropfguts in einen Flüssiganteil und einen Festanteil,
d) vierten Mitteln zum Verteilen des Flüssiganteils oder des Flüssiganteils und von Gewürzen oder des Flüssiganteils und von Garhilfsmitteln oder des Flüssiganteils und von Gewürzen und von Garhilfsmitteln in das Fleisch (F) und
e) fünften Mitteln zum Steuern des Auffangens und/oder Trennens und/oder Verteilens.

11. Garofen nach Anspruch 10, mit
vierten Mitteln zum Verteilen des Flüssiganteils oder des Flüssiganteils und von Gewürzen oder des Flüssiganteils und von Garhilfsmitteln oder des Flüssiganteils und von Gewürzen und von Garhilfsmitteln in und auf das Fleisch (F).

12. Garofen nach Anspruch 10 oder 11, bei dem die ersten Mittel wenigstens einen Rost (18) und/oder eine Wanne mit wenigstens einem Ablauf für das Tropfgut aufweisen.

13. Garofen nach Anspruch 12, bei dem der Ablauf ständig offen oder gesteuert öffenbar ist.

14. Garofen nach einem der Ansprüche 10 bis 13, bei dem die zweiten Mittel einen Sammler aufweisen, der das vom Fleisch (F) abgegebene Tropfgut unter dem Einfluss der Schwerkraft an die dritten Mittel leitet.

15. Garofen nach Anspruch 14, bei dem der Sammler das Tropfgut unmittelbar an den ersten Mitteln und/oder am Boden des Garofens aufnimmt.

16. Garofen nach einem der Ansprüche 10 bis 15, bei dem die dritten Mittel ein von den zweiten Mitteln beschicktes Sieb (31) und einen unter dem Sieb (31) angeordneten Behälter (22) für den Flüssiganteil aufweisen.

17. Garofen nach Anspruch 16, bei dem dem Behälter (22) wahlweise der Flüssiganteil und/oder Gewürze und/oder Garhilfsmittel, insbesondere Öl und/oder Dampf, zuführbar sind.

18. Garofen nach einem der Ansprüche 10 bis 16, bei dem die vierten Mittel wenigstens ein über den ersten Mitteln angeordnetes Sprühsystem (36) und/oder einen in das Fleisch (F) einführbaren Fleischspieß (46) aufweisen, die über eine Pumpe (30) und ein Leitungssystem (28) mit den dritten Mitteln verbunden sind.

19. Garofen nach Anspruch 18, bei dem das Sprühsystem (36) und/oder der Fleischspieß (46) mit dem Leitungssystem (28) lösbar verbindbar, insbesondere an das Leitungssystem (28) steckbar ist.

20. Garofen nach Anspruch 18 oder 19, bei dem sich das Sprühsystem (36) über den ersten Mitteln wölbt.

21. Garofen nach einem der Ansprüche 18 bis 20, bei dem das Sprühsystem (36) einen mit dem Leitungssystem (28) verbindbaren horizontalen, ersten Hohlstab (42) aufweist, der von mehreren, voneinander beabstandeten zweiten Hohlstäben (40) geschnitten wird, die in Richtung erste Mittel gerichtete Düsen (44) besitzen.

22. Garofen nach einem der Ansprüche 18 bis 21, bei dem das Sprühsystem (36) mit dem Flüssiganteil und/oder Gewürzen und/oder Öl beaufschlagbar ist.

23. Garofen nach einem der Ansprüche 18 bis 22, bei dem der Fleischspieß (46) wahlweise mit Dampf und/oder Gewürzen beaufschlagbar ist.

24. Garofen nach einem der Ansprüche 18 bis 23, bei dem der Fleischspieß (46) einen Temperatur und/oder Feuchtesensor aufweist.

25. Garofen nach einem der Ansprüche 18 bis 24, bei dem das Leitungssystem (28) nahe und/oder hinter einer der Wandungen (6, 12) des Garofens (2) angeordnet ist.

26. Garofen nach einem der Ansprüche 18 bis 25, bei dem die fünften Mittel Eingabemittel, Steuermittel, Speichermittel uns Anzeigemittel aufweisen.

## Claims

1. Method of cooking, especially roasting, meat and fish wherein
a) the meat is accommodated lying flat in an oven,
b) the juices escaping out of the meat and draining off the meat during the cooking process are collected and separated into a solid fraction and a liquid fraction and
d) the liquid fraction or the liquid fraction and seasonings or the liquid fraction and cooking enhancers or the liquid fraction and seasonings and cooking enhancers is/are distributed by program-control into the meat.

2. Method according to claim 1, wherein
the liquid fraction or the liquid fraction and seasonings or the liquid fraction and cooking enhancers or the liquid fraction and seasonings and cooking enhancers is/are distributed by program-control into and on to the meat.

3. Method according to claim 1 or 2, wherein liquid seasonings are distributed as seasonings.

4. Method according to one of claims 1 to 3, wherein oil is used as a cooking enhancer for distribution on to the meat and steam or liquid seasoning is used as a cooking enhancer for distribution into the meat.

5. Method according to one of claims 1 to 4, wherein the liquid fraction and/or the seasonings and/or the cooking enhancers are sprayed on to the meat and/or are injected into the meat.

6. Method according to one of claims 1 to 5, wherein the seasonings and/or the cooking enhancers are added to the liquid fraction prior to distribution on to or into the meat.

7. Method according to one of claims 1 to 6, wherein the distribution program on the oven is entered, switched on or selected by the operator.

8. Method according to one of claims 1 to 7, wherein the distribution program is switched on or selected by a cooking program.

9. Method according to one of claims 1 to 8, wherein the distribution program is integrated into a cooking program.

10. Oven, especially for performing the method according to one of claims 1 to 9, having
a) first means for accommodating meat and fish (F) lying flat,
b) second means for collecting the juices escaping out of the meat (F) and draining off the meat (F) during the cooking process,
c) third means for separating the juices into a liquid fraction and a solid fraction,
d) fourth means for distribution of the liquid fraction or of the liquid fraction and seasonings or of the liquid fraction and cooking enhancers or of the liquid fraction and seasonings and cooking enhancers into the meat (F) and
e) fifth means for controlling the collection and/or the separation and/or the distribution.

11. Oven according to claim 10, having
fourth means for distribution of the liquid fraction or of the liquid fraction and seasonings or of the liquid fraction and cooking enhancers or of the liquid fraction and seasonings and cooking enhancers into and on to the meat (F).

12. Oven according to claim 10 or 11, wherein the first means have at least one grid (18) and/or a tray with at least one drain outlet for the juices.

13. Oven according to claim 12, wherein the drain is constantly open or is capable of being opened under control.

14. Oven according to one of claims 10 to 13, wherein the second means have a collector, which conducts the juices released by the meat (F) to the third means under the influence of gravity.

15. Oven according to claim 14, wherein the collector picks up the juices directly on the first means and/or on the base of the oven.

16. Oven according to one of claims 10 to 15, wherein the third means have a strainer (31) fed by the second means and a container (22) disposed underneath the strainer (31) for the liquid fraction.

17. Oven according to claim 16, wherein alternatively the liquid fraction and/or seasonings and/or cooking enhancer, especially oil and/or steam are capable of being fed into the container (22).

18. Oven according to one of claims 10 to 16, wherein the fourth means have at least one spray system (36) disposed above the first means and/or a meat skewer (46) insertable into the meat (F), which are connected to the third means by way of a pump (30) and a pipe system (28).

19. Oven according to claim 18, wherein the spray system (36) and/or the meat skewer (46) is capable of being detachably joined to the pipe system (28), is especially capable of being plugged into the pipe system (28).

20. Oven according to claim 18 or 19, wherein the spray system (36) arches over the first means.

21. Oven according to one of claims 18 to 20, wherein the spray system (36) has a horizontal first hollow rod (42) joinable to the pipe system (28), said rod being intersected by a plurality of second hollow rods (40) spaced at a distance from each other which have nozzles (44) directed towards the first means.

22. Oven according to one of claims 18 to 21, wherein the spray system (36) can be supplied with the liquid fraction and/or seasonings and/or oil.

23. Oven according to one of claims 18 to 22, wherein the meat skewer (46) can be supplied optionally with steam and/or seasonings.

24. Oven according to one of claims 18 to 23, wherein the meat skewer (46) has a temperature and/or moisture sensor.

25. Oven according to one of claims 18 to 24, wherein the pipe system (28) is disposed close to and/or behind one of the walls (6, 12) of the oven (2).

26. Oven according to one of claims 18 to 25, wherein the fifth means have entry means, control means, storage means and display means.

## Revendications

1. Procédé pour la cuisson, en particulier le rôtissage, de viande et de poisson, dans lequel
a) la viande est reçue au repos dans un four de cuisson,
b) le produit d'égouttement sortant pendant le processus de cuisson de la viande et se détachant de la viande est recueilli et est séparé en une part solide et une part liquide et
c) la part liquide ou bien la part liquide et des aromates ou bien la part liquide et des moyens auxiliaires de cuisson ou bien la part liquide et des aromates et des moyens auxiliaires de cuisson est respectivement sont répartis, en étant commandés par programme, dans la viande.

2. Procédé selon la revendication 1, dans lequel la part liquide ou bien la part liquide et des aromates ou bien la part liquide et des moyens auxiliaires de cuisson ou bien la part liquide et des aromates et des moyens auxiliaires de cuisson est respectivement sont répartis, en étant commandés par programme, dans et sur la viande.

3. Procédé selon la revendication 1 ou 2, dans lequel des aromates liquides sont répartis comme aromates.

4. Procédé selon l'une des revendications 1 à 3, dans lequel, comme moyen auxiliaire de cuisson, de l'huile est répartie sur la viande, et de la vapeur ou un aromate liquide est réparti dans la viande.

5. Procédé selon l'une des revendications 1 à 4, dans lequel la part liquide et/ou les aromates et/ou les moyens auxiliaires de cuisson sont pulvérisés sur la viande et/ou sont injectés dans la viande.

6. Procédé selon l'une des revendications 1 à 5, dans lequel les aromates et/ou les moyens auxiliaires de cuisson sont ajoutés à la part liquide avant la distribution sur ou dans la viande.

7. Procédé selon l'une des revendications 1 à 6, dans lequel le programme de répartition au four de cuisson est entré, connecté ou sélectionné par l'utilisateur.

8. Procédé selon l'une des revendications 1 à 7, dans lequel le programme de répartition est connecté ou sélectionné par un programme de cuisson.

9. Procédé selon l'une des revendications 1 à 8, dans lequel le programme de répartition est intégré dans un programme de cuisson.

10. Four de cuisson, en particulier pour l'exécution du procédé selon l'une des revendications 1 à 9, avec
a) des premiers moyens pour la réception à l'état de repos de viande et de poisson (F),
b) des deuxièmes moyens pour récupérer le produit d'égouttement sortant pendant le processus de cuisson de la viande (F) et se libérant de la viande (F),
c) des troisièmes moyens pour séparer le produit d'égouttement en une part liquide et une part solide,
d) des quatrièmes moyens pour répartir la part liquide ou bien la part liquide et des aromates ou bien la part liquide et des moyens auxiliaires de cuisson ou bien la part liquide et des aromates et des moyens auxiliaires de cuisson dans la viande (F) et
e) des cinquièmes moyens pour commander le recueillement et/ou la séparation et/ou la répartition.

11. Four de cuisson selon la revendication 10, avec des quatrièmes moyens pour répartir la part liquide ou bien la part liquide et des aromates ou bien la part liquide et des moyens auxiliaires de cuisson ou bien la part liquide et des aromates et des moyens auxiliaires de cuisson dans et sur la viande (F).

12. Four de cuisson selon la revendication 10 ou 11, où les premiers moyens présentent au moins une grille (18) et/ou une cuvette avec au moins un écoulement pour le produit d'égouttement.

13. Four de cuisson selon la revendication 12, où l'écoulement est continuellement ouvert ou peut être ouvert d'une manière commandée.

14. Four de cuisson selon l'une des revendications 10 à 13, dans lequel les deuxièmes moyens présentent un collecteur qui guide le produit d'égouttement émis par la viande (F) sous l'effet de la gravité aux troisièmes moyens.

15. Four de cuisson selon la revendication 14, dans lequel le collecteur recueille le produit d'égouttement directement aux premiers moyens et/ou au fond du four de cuisson.

16. Four de cuisson selon l'une des revendications 10 à 15, dans lequel les troisièmes moyens présentent un tamis (31) alimenté par les deuxièmes moyens et un récipient (22) pour la part liquide disposé sous le tamis (31).

17. Four de cuisson selon la revendication 16, dans lequel peuvent être amenés au récipient (22) sélectivement la part liquide et/ou des aromates et/ou des moyens auxiliaires de cuisson, en particulier de l'huile et/ou de la vapeur.

18. Four de cuisson selon l'une des revendications 10 à 16, où les quatrièmes moyens présentent au moins un système de pulvérisation (36) disposé au-dessus des premiers moyens et/ou une broche de viande (46) pouvant être insérée dans la viande (F), qui est reliée par une pompe (30) et un système de ligne (28) aux troisièmes moyens.

19. Four de cuisson selon la revendication 18, dans lequel le système de pulvérisation (36) et/ou la broche de viande (46) peut être relié amoviblement au système de ligne (28), en particulier peut être enfiché dans le système de ligne (28).

20. Four de cuisson selon la revendication 18 ou 19, dans lequel le système de pulvérisation (36) est bombé au-dessus des premiers moyens.

21. Four de cuisson selon l'une des revendications 18 à 20, dans lequel le système de pulvérisation (36) présente une première tige creuse horizontale (42) pouvant être reliée au système de ligne (28), qui est coupée par plusieurs deuxièmes tiges creuses (40) espacées les unes des autres, qui possèdent des buses (44) orientées dans la direction des premiers moyens.

22. Four de cuisson selon l'une des revendications 18 à 21, dans lequel le système de pulvérisation (36) peut être chargé par la part liquide et/ou les aromates et/ou l'huile.

23. Four de cuisson selon l'une des revendications 18 à 22, dans lequel la broche de viande (46) peut être chargée sélectivement en vapeur et/ou en aromates.

24. Four de cuisson selon l'une des revendications 18 à 23, dans lequel la broche de viande (46) présente un capteur de température et/ou d'humidité.

25. Four de cuisson selon l'une des revendications 18 à 24, dans lequel le système de ligne (28) est disposé à proximité et/ou derrière l'une des parois (6, 12) du four de cuisson (2).

26. Four de cuisson selon l'une des revendications 18 à 25, dans lequel les cinquièmes moyens présentent des moyens d'entrée, des moyens de commande, des moyens de stockage et des moyens d'affichage.
